# EUROPEAN PATENT SPECIFICATION

(11) **EP 3 160 002 B1**
(45) Date of publication and mention of the grant of the patent: **27.02.2019**
(21) Application number: 16188323.6
(22) Date of filing: 12.09.2016
(51) Int. Cl.: H02J 7/00, H01M 10/44

(54) **ACTIVE EQUALIZING CHARGING DEVICE**
AKTIV AUSGLEICHENDES LADEGERÄT
DISPOSITIF DE CHARGE D'ÉGALISATION ACTIF

(30) Priority: 14.10.2015 TW 104133796
(43) Date of publication of application: 26.04.2017
(73) Proprietor: Reduce Carbon Energy Develop Co., Ltd., New Taipei City 238 (TW)
(72) Inventor: Chen, Fu-Chieh, 238 New Taipei City (TW)
(74) Representative: Brown, Michael Stanley

(56) References cited:
- WO-A1-2008/137764
- JP-A- 2003 157 908
- US-A1- 2010 090 662
- US-A1- 2013 069 594
- US-A1- 2014 089 692

## Description

### BACKGROUND OF THE INVENTION

### (a) Field of the Invention

The present invention relates to a method of charging a secondary battery using an active equalizing charging device.

### (b) Description of the Prior Art

A secondary battery is a battery that can be repeatedly charged and discharged. A large number of secondary batteries are used as a power source in various types of mobile equipment (such as automobiles, motor cycles, mobile phones, and the like). However, the different power requirements of the various types of mobile equipment requires secondary batteries with various different specifications (such as charge capacity, voltage, and the like). A secondary battery primarily comprises a storage battery unit and a control circuit. The storage battery unit primarily comprises a plurality of strings of battery cells constructed from battery cells connected in series, with each of the string of battery cells further connected in series. The storage battery unit is used to store electric power, and the control circuit is an electronic circuit. The control circuit is electrically connected to the storage battery unit, and the storage battery unit uses the control circuit to electrically connect to an external electric equipment or a charging device, thereby enabling charging/discharging of the storage battery unit.

Equalized charging of each of the string of battery cells is necessary when charging the secondary battery to prevent overcharging of the battery cells of a single string of battery cells, which would otherwise affect the serviceable life of the battery cells and safety when charging. Charging devices of the prior art adopt a consume power method or a suspend charging method to achieve the object of equalized charging of each of the strings of battery cells, wherein the consume power method primarily uses a dissipative equalizing circuit to cause consumption of the electric power of a string of battery cells when the voltage reaches a preset maximum or saturation voltage. The suspend charging method uses a circuit design that suspends charging of a string of battery cells when the voltage reaches a preset maximum voltage.

Taiwan Patent Nos. I483507 and I502849 disclose two different circuit designs for a charging device and charging method, with both these patents respectively disclosing a charging device and a charging method that adopts a suspend charging method to achieve equalized charging. Other forms of charging devices are described in Japanese Specification No. 2003 157908, WO2008/137764 and US2013/069594.

### SUMMARY OF THE INVENTION.

The present invention provides a method of charging a secondary battery as claimed in claim 1.

A brief description of the drawings is provided below followed by a detailed description of the preferred embodiment.

### BRIEF DESCRIPTION OF THE DRAWINGS

FIG. 1 is a circuit block diagram of an active equalizing charging device,
FIG. 2 is a flow diagram depicting the method of charging a secondary battery according to the present invention,
FIG. 3 is a circuit block diagram of the active equalizing charging device carrying out pre-charging steps according to the present invention, and
FIG. 4 is a circuit block diagram of the active equalizing charging device carrying out collective charging steps according to the present invention.

### DETAILED DESCRIPTION OF THE PREFERRED EMBODIMENT

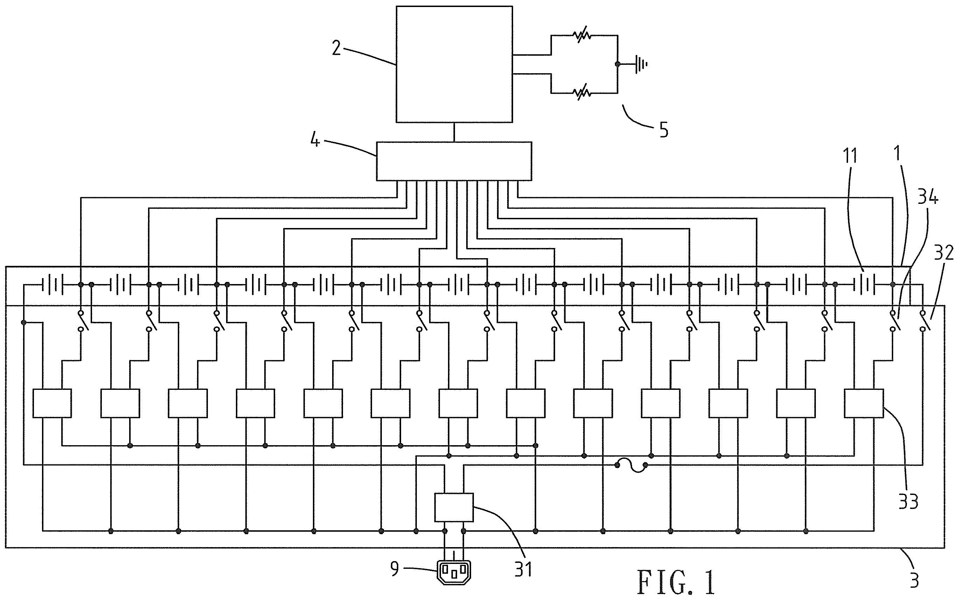

Referring to FIG. 1, which shows a circuit block diagram of an active equalizing charging device that is used to perform the method of the invention and depicts the coupling configuration of the active equalizing charging device to a storage battery unit 1 of a secondary battery. The storage battery unit 1 comprises a plurality of battery modules 11 connected in series. The battery modules 11 are assembled from a plurality of battery cells connected in series; the battery modules 11 can also be a single battery cell.

The active equalizing charging device comprises a control unit 2, a charging unit 3, a voltage detection unit 4, and a temperature detection unit 5. The control unit 2 is constructed from an electronic circuit, with the control unit 2 coupled to the charging unit 3 and used to control the charging unit 3. The voltage detection unit 4 and the control unit 2 are coupled to each of the battery modules 11, and the voltage detection unit 4 is a voltage detection circuit used to detect the voltage of each of the battery modules 11, which serves as basis to enable the control unit 2 to control the charging unit 3. The temperature detection unit 5 is coupled to the control unit 2; the temperature detection unit 5 is a temperature detection circuit, and is used to detect the temperature of the storage battery unit 1, which serves as basis to enable the control unit 2 to control the charging unit 3.

The charging unit 3 comprises a first battery charger 31, a first switch 32, a plurality of second battery chargers 33, and a plurality of second switches 34. The first battery charger 31 and the storage battery unit 1 are coupled to an external power source 9, and the first battery charger 31 is used to charge each of the battery modules 11. The power source 9 may be a generator or a mains power supply able to supply electric power. The first switch 32 and the first battery charger 31 are coupled to the storage battery unit 1, and the first switch 32 is used to close or open the circuit between the first battery charger 31 and the storage battery unit 1. In addition, the control unit 2 controls the first switch 32. The number of the second battery chargers 33 and the second switches 34 matches the number of the battery modules 11. Each of the second battery chargers 33 is respectively coupled to one of the battery modules 11 and the power source 9, and each of the battery modules 11 is respectively coupled to one of the second battery chargers 33, thereby enabling each of the second battery chargers 33 to respectively charge each of the battery modules 11. Each of the second switches 34 is respectively coupled to one of the second battery chargers 33 and one of the battery modules 11, and the second switches 34 are used to close or open the circuit between each of the second battery chargers 33 and the battery modules 11. Moreover, the control unit 2 controls each of the second switches 34. If the charging voltage output of the first battery charger 31 is V1, the charging voltage output of the second battery chargers 33 is V2, and the number of the second battery chargers 33 is n, then V1 >n x V2.

When the active equalizing charging device is used to charge a secondary battery, the active equalizing charging device is first coupled to the external power source 9, whereupon the active equalizing charging device can be used to charge a secondary battery,

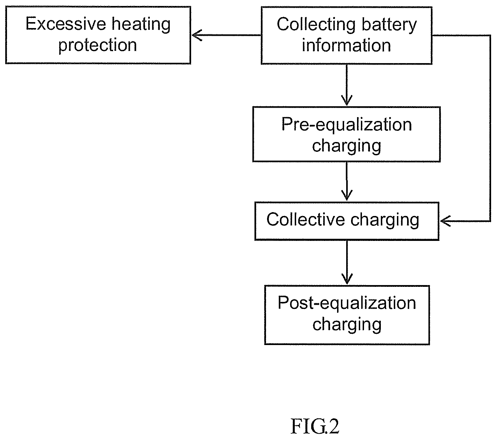

Referring to FIG. 2, which shows the method of using the active equalizing charging device to charge a secondary battery, comprising the following steps:
Collecting battery information: The voltage detection unit 4 detects the voltage of each of the battery modules 11, the temperature detection unit 5 detects the temperature of the storage battery unit 1, and the control unit 2 controls the charging unit 3 based on the voltage and temperature information detected by the voltage detection unit 4 and the temperature detection unit 5.

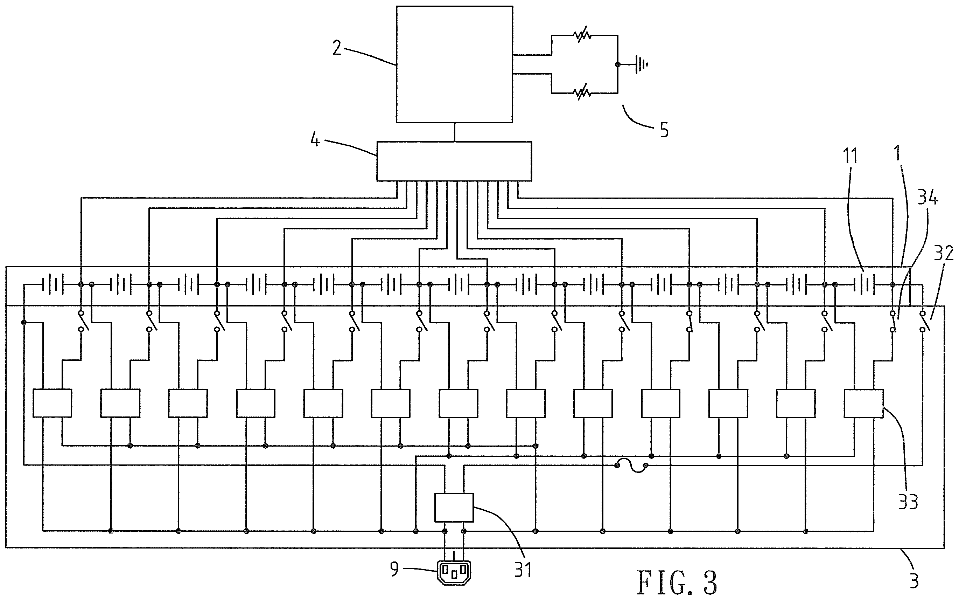

Pre-equalization charging: As shown in FIG. 3, if the voltage of at least one of the battery modules 11 is below the average voltage value, then the first switch 32 remains in an off-state, thus forming an open circuit between the first battery charger 31 and the storage battery unit 1. And the second switches 34 coupled to the battery modules 11 with a voltage below the average voltage value are activated to form a closed circuit state, with the other second switches 34 remaining in an off-state. Accordingly, the charging unit 3 only charges the battery modules 11 with a voltage below the average voltage value. Pre-equalization charging stops when the voltage of each of the battery modules 11 equals or is above the average voltage value. The aforementioned average voltage value is determined by the internal resistance value of the battery modules 11.

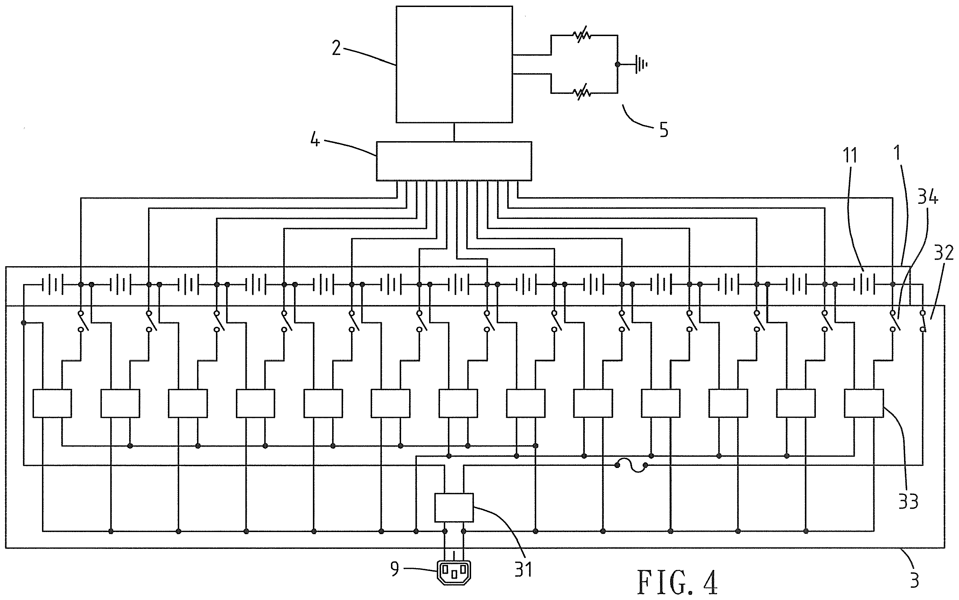

Collective charging: As shown in FIG. 4. if the voltage of each of the battery modules 11 is equal to or is above the average voltage value, then each of the second switches 34 remains in an off-state, and the first switch 32 is activated to form a closed circuit state, thus forming a closed circuit between the first battery charger 31 and the storage battery unit 1, enabling the first battery charger 31 to charge each of the battery modules 11. Collective charging stops when the voltage of at least one the battery modules 11 is equal to the maximum appropriate voltage, i.e. a saturation voltage.

Post-equalization charging: If the voltage of at least one of the battery modules 11 is equal to the saturation voltage, then the first switch 32 is cut off, and an open circuit between the first battery charger 31 and the storage battery unit 1 is formed; the second switches 34 coupled to the battery modules 11 with a voltage equal to the saturation voltage are cut off, and the second switches 34 coupled to the battery modules 11 with a voltage below the saturation voltage are activated to form closed circuit states. Accordingly, the charging unit 3 only charges the battery modules 11 with a voltage below the saturation voltage. When the voltage of each of the battery modules 11 is equal to the saturation voltage, then each of the second switches 34 is cut off, thereby completing the charging of the secondary battery.

Excessive heating protection: When the temperature of the storage battery unit 1 is equal to or greater than a preset safe temperature, then the first switch 32 and the second switches 34 all remain in a cut-off state, thus suspending charging of the storage battery unit 1 and preventing damage thereto when charging the secondary battery due to too high temperature.

Only the first battery charger 31 or each of the second battery chargers 33 charges each of the battery modules 11 at the same time.

During the initial stage of charging of a secondary battery, if the voltage of at least one of the battery modules 11 is below the average voltage value, then pre-equalization charging is carried out, thereby protecting the battery modules 11 and preventing reduction in the stored power capacity of one of the battery modules 11 making up the storage battery unit 1.

If the voltage of each of the battery modules 11 is equal to or greater than the average voltage value, then collective charging is carried out, and the first battery charger 31 charges all of the battery modules 11 of the storage battery unit 1, thus enabling rapid charging of each of the battery modules 11. However, with the active equalizing charging device coupled to the secondary battery, when collecting battery information, if the voltage of each of the battery modules 11 is equal to or greater than the average voltage value, then pre-equalization charging is not carried out, directly proceeded with collective charging.

If the voltage of at least one of the battery modules 11 is equal to the saturation voltage, then post-equalization charging is carried out, and each of the second battery chargers 33 with the relatively low output voltage of V2 is used to respectively continue to charge each of the battery modules 11 not yet fully charged. Accordingly, the charging unit 3 can effectively use the first battery charger 31 and a plurality of the second battery chargers 33 to carry out charging of each of the battery modules 11, equalizing the charging of each of the battery modules 11, and achieving equalization between the time consumed to carry out charging and the capacity of the charging unit 3.

The control unit 2 of the charging device may be connected to a wireless communication unit. The wireless communication unit is used to transmit voltage values and temperature values of the storage battery unit 1 of the secondary battery to a cloud management system of the battery supplier. The cloud management system is able to monitor voltages and temperature of the secondary battery, recording the number of times the secondary battery has been charged, voltage values, and the time consumed for each charge, based on which the cloud management system diagnoses whether or not an anomaly has occurred in the secondary battery. When there are anomalies in the voltages and temperature of the secondary battery, the cloud management system is able to notify the user of the secondary battery to proceed with battery maintenance or replacement of the secondary battery. When charging of the secondary battery is complete, the cloud management system can also actively notify the user.

## Claims

1. A method of using an active equalizing charging device to charge a secondary battery unit (1) comprising a plurality of battery modules (11), comprising the following steps:
collecting battery information: a voltage detection unit (4) detects the voltage of each of the battery modules (11), a temperature detection unit (5) detects the temperature of the storage battery unit (1), and a control unit (2) controls a charging unit (3) based on the voltages and temperature information detected by the voltage detection unit (4) and the temperature detection unit (5);
the charging unit (3) comprising a first battery charger (31), a first switch (32), a plurality of second battery chargers (33) and a plurality of second switches (34);
**characterized in that** it includes the following steps:-
pre-equalization charging: if the voltage of at least one of the battery modules (11) is below the average voltage of the battery modules (11) at the initial state of charging, then the first switch (32) remains in an off-state, and an open circuit is formed between the first battery charger (31) and the battery unit (1), whereupon the second switch (34) coupled to the battery module (11) with the voltage below the average voltage is activated to form a closed circuit state, and the other second switches (34) remain in an off-state, accordingly, the charging unit (3) only charges the battery module (11) with the voltage below the average voltage, pre-equalization charging stops when the voltage of each of the battery modules (11) equals or is above the average voltage; the average voltage is determined by the internal resistance value of the battery modules (11);
collective charging: if the voltage of each of the battery modules (11) equals or is above the average voltage, then each of the second switches (34) remains in an off-state, and the first switch (32) is activated to form a closed circuit state between the first battery charger (31) and the battery unit (1), enabling the first battery charger (31) to charge each of the battery modules (11), collective charging stops when the voltage of at least one of the battery modules is equal to a preset saturation voltage;
post-equalization charging: if the voltage of at least one of the battery modules (11) is equal to the preset saturation voltage, then the first switch (32) is cut off, and an open circuit is formed between the first battery charger (31) and the battery unit (1), whereupon the second switches (34) coupled to the battery modules (11) with a voltage equal to the preset saturation voltage are cut off, and the second switches (34) coupled to the battery modules (11) with a voltage below the preset saturation voltage are activated to form closed circuit states, accordingly, the charging unit (3) only charges the battery modules (11) with a voltage below the preset saturation voltage; when the voltage of each of the battery modules (11) is equal to the preset saturation voltage, then each of the second switches (34) is cut off, thereby completing the charging of the secondary battery;
excessive heating protection: when the temperature of the battery unit (1) is equal to or greater than a preset safe temperature, then the first switch (32) and the second switches (34) all remain in a cut-off state, thus suspending charging of the battery unit (1);
only the first battery charger (31) or each of the second battery chargers (33) charges each of the battery modules (11) at the same time.

## Patentansprüche

1. Verfahren zur Verwendung einer aktiven ausgleichenden Ladevorrichtung zum Laden einer Sekundärbatterieeinheit (1), die mehrere Batteriemodule (11) umfasst, mit den folgenden Schritten:
Sammeln von Batterieinformationen: eine Spannungsdetektionseinheit (4) detektiert die Spannung jedes der Batteriemodule (11), eine Temperaturdetektionseinheit (5) detektiert die Temperatur der Speicherbatterieeinheit (1) und eine Steuereinheit (2) steuert eine Ladeeinheit (3) auf der Basis der Spannungen und Temperaturinformationen, die durch die Spannungsdetektionseinheit (4) und die Temperaturdetektionseinheit (5) detektiert werden;
wobei die Ladeeinheit (3) ein erstes Batterieladegerät (31), einen ersten Schalter (32), mehrere zweite Batterieladegeräte (33) und mehrere zweite Schalter (34) umfasst;
**dadurch gekennzeichnet, dass** es die folgenden Schritte umfasst:
Vorausgleichs-Laden: wenn die Spannung mindestens eines der Batteriemodule (11) im anfänglichen Ladezustand unter der mittleren Spannung der Batteriemodule (11) liegt, bleibt der erste Schalter (32) in einem ausgeschalteten Zustand und zwischen dem ersten Batterieladegerät (31) und der Batterieeinheit (1) wird ein offener Schaltkreis gebildet, woraufhin der mit dem Batteriemodul (11) mit der Spannung unter der mittleren Spannung gekoppelte zweite Schalter (34) aktiviert wird, um einen Zustand eines geschlossenen Schaltkreises zu bilden, und die anderen zweiten Schalter (34) in einem ausgeschalteten Zustand bleiben, und dementsprechend die Ladeeinheit (3) nur das Batteriemodul (11) mit der Spannung unter der mittleren Spannung lädt, das Vorausgleichs-Laden aufhört, wenn die Spannung jedes der Batteriemodule (11) größer oder gleich der mittleren Spannung ist;
und die mittlere Spannung durch den Innenwiderstandswert der Batteriemodule (11) bestimmt wird;
kollektives Laden: wenn die Spannung jedes der Batteriemodule (11) größer oder gleich der mittleren Spannung ist, bleibt jeder der zweiten Schalter (34) in einem ausgeschalteten Zustand und der erste Schalter (32) wird aktiviert, um einen Zustand eines geschlossenen Schaltkreises zwischen dem ersten Batterieladegerät (31) und der Batterieeinheit (1) zu bilden, wobei das erste Batterieladegerät (31) freigegeben wird, um jedes der Batteriemodule (11) zu laden, und das kollektive Laden aufhört, wenn die Spannung mindestens eines der Batteriemodule gleich einer voreingestellten Sättigungsspannung ist;
Nachausgleichs-Laden: wenn die Spannung mindestens eines der Batteriemodule (11) gleich der voreingestellten Sättigungsspannung ist, wird der erste Schalter (32) abgeschaltet und ein offener Schaltkreis zwischen dem ersten Batterieladegerät (31) und der Batterieeinheit (1) gebildet, woraufhin die mit den Batteriemodulen (11) mit einer Spannung gleich der voreingestellten Sättigungsspannung gekoppelten zweiten Schalter (34) abgeschaltet werden und die mit den Batteriemodulen (11) mit einer Spannung unter der voreingestellten Sättigungsspannung gekoppelten zweiten Schalter (34) aktiviert werden, um Zustände eines geschlossenen Schaltkreises zu bilden, und dementsprechend die Ladeeinheit (3) nur die Batteriemodule (11) mit einer Spannung unter der voreingestellten Sättigungsspannung lädt; und wenn die Spannung jedes der Batteriemodule (11) gleich der voreingestellten Sättigungsspannung ist, jeder der zweiten Schalter (34) abgeschaltet wird, um dadurch das Laden der Sekundärbatterie abzuschließen;
Schutz vor übermäßiger Erwärmung: wenn die Temperatur der Batterieeinheit (1) größer oder gleich einer voreingestellten sicheren Temperatur ist, bleiben der erste Schalter (32) und die zweiten Schalter (34) alle in einem abgeschalteten Zustand, um somit das Laden der Batterieeinheit (1) zu suspendieren; und
nur das erste Batterieladegerät (31) oder jedes der zweiten Batterieladegeräte (33) lädt jedes der Batteriemodule (11) gleichzeitig.

## Revendications

1. Procédé d'utilisation d'un dispositif de charge d'égalisation actif pour charger une unité de batterie secondaire (1) comprenant une pluralité de modules de batterie (11), comprenant les étapes suivantes :
collecte des informations sur la batterie : une unité de détection de tension (4) détecte la tension de chacun des modules de batterie (11), une unité de détection de température (5) détecte la température de l'unité de batterie de stockage (1), et une unité de commande (2) commande une unité de charge (3) sur la base des informations de tensions et de température détectées par l'unité de détection de tension (4) et l'unité de détection de température (5) ;
l'unité de charge (3) comprenant un premier chargeur de batterie (31), un premier commutateur (32), une pluralité de seconds chargeurs de batterie (33) et une pluralité de seconds commutateurs (34) ;
**caractérisé en ce qu'**il comprend les étapes suivantes :
pré-égalisation de la charge : si la tension d'au moins l'un des modules de batterie (11) est inférieure à la tension moyenne des modules de batterie (11) à l'état initial de la charge, alors le premier commutateur (32) reste dans un état bloqué et un circuit ouvert est formé entre le premier chargeur de batterie (31) et l'unité de batterie (1), après quoi le second commutateur (34) couplé au module de batterie (11) ayant une tension inférieure à la tension moyenne est activé pour former un état de circuit fermé, et les autres seconds commutateurs (34) restent dans un état bloqué, en conséquence, l'unité de charge (3) charge uniquement le module de batterie (11) ayant la tension inférieure à la tension moyenne, la charge de pré-égalisation s'arrête lorsque la tension de chacun des modules de batterie (11) est égale ou supérieure à la tension moyenne ; la tension moyenne est déterminée par la valeur de résistance interne des modules de batterie (11) ;
charge collective : si la tension de chacun des modules de batterie (11) est égale ou supérieure à la tension moyenne, chacun des seconds commutateurs (34) reste dans un état bloqué et le premier commutateur (32) est activé pour former un état de circuit fermé entre le premier chargeur de batterie (31) et l'unité de batterie (1), ce qui permet au premier chargeur de batterie (31) de charger chacun des modules de batterie (11), et la charge collective s'arrête lorsque la tension d'au moins l'un des modules de batterie est égale à une tension de saturation prédéfinie ;
post-égalisation de la charge : si la tension d'au moins l'un des modules de batterie (11) est égale à la tension de saturation prédéfinie, alors le premier commutateur (32) est interrompu et un circuit ouvert est formé entre le premier chargeur de batterie (31) et l'unité de batterie (1), après quoi les seconds commutateurs (34) couplés aux modules de batterie (11) ayant une tension égale à la tension de saturation prédéfinie sont interrompus, et les seconds commutateurs (34) couplés aux modules de batterie (11) avec une tension inférieure à la tension de saturation prédéfinie sont activés de façon à former des états de circuit fermé, en conséquence, l'unité de charge (3) ne charge que les modules de batterie (11) ayant une tension inférieure à la tension de saturation prédéfinie ; lorsque la tension de chacun des modules de batterie (11) est égale à la tension de saturation prédéfinie, alors chacun des seconds commutateurs (34) est interrompu, ce qui termine la charge de la batterie secondaire ;
protection thermique excessive : lorsque la température de l'unité de batterie (1) est égale ou supérieure à une température de sécurité prédéfinie, le premier commutateur (32) et les seconds commutateurs (34) restent alors tous dans un état bloqué, ce qui suspend la charge de l'unité de batterie (1) ;
seul le premier chargeur de batterie (31) ou chacun des seconds chargeurs de batterie (33) charge chacun des modules de batterie (11) en même temps.
